(19) **Europäisches Patentamt European Patent Office Office européen des brevets**

(11) **EP 4 496 829 B1**

(12) **EUROPEAN PATENT SPECIFICATION**

(45) Date of publication and mention of the grant of the patent:
**24.12.2025 Bulletin 2025/52**

(21) Application number: **23715448.9**

(22) Date of filing: **23.03.2023**

(51) International Patent Classification (IPC):
**C08G 65/36** *(2006.01)* **B27K 3/15** *(2006.01)*
**C08L 71/14** *(2006.01)*

(52) Cooperative Patent Classification (CPC):
(C-Sets available)
**C08G 65/36; B27K 3/15; C08L 71/14;**
B27K 2240/70 (Cont.)

(86) International application number:
**PCT/EP2023/057532**

(87) International publication number:
**WO 2023/180473 (28.09.2023 Gazette 2023/39)**

(54) **POLYMERIZABLE SOLUTION FOR OBTAINING A FURAN POLYMER IMPREGNATED MATERIAL**

POLYMERISIERBARE LÖSUNG ZUR HERSTELLUNG EINES MIT FURANPOLYMER IMPRÄGNIERTEN MATERIALS

SOLUTION POLYMÉRISABLE PERMETTANT D'OBTENIR UN MATÉRIAU IMPRÉGNÉ DE POLYMÈRE DE FURANE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.03.2022 NO 20220354**

(43) Date of publication of application:
**29.01.2025 Bulletin 2025/05**

(73) Proprietor: **Kebony AS**
**3739 Skien (NO)**

(72) Inventors:
• **KRISTIANSEN, Karl Christian**
**3962 Stathelle (NO)**
• **LIE, Aleksander**
**3713 Skien (NO)**

(74) Representative: **Acapo Onsagers AS**
**Edvard Griegs vei 1**
**5059 Bergen (NO)**

(56) References cited:
WO-A1-2011/144608      WO-A1-2020/053818
WO-A2-2004/011214      WO-A2-2004/011216
US-A1- 2016 144 531

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/14, C08K 5/09**

## Description

## Technical field

The present invention relates to a polymerizable solution for obtaining a furan polymer impregnated material such as wood.

Especially, the present invention relates to the re-use of condensate from a prior drying and curing process as a carrier in the polymerizable solution.

## Background

Furan polymer impregnated wood is known in the art. Furan polymer impregnated wood is generally produced by application/impregnation of the wood with a suitable amount of a polymerizable solution/liquid, and thereafter heating and curing the wood such that the polymerizable compounds of the polymerizable solution are polymerized/cured into a furan polymer in the wood cells.

The polymerizable solution generally comprises low molecular furan derivatives, e.g. furfural, furfuryl alcohol, bishydroxymethylfuran or combinations thereof, and optionally catalysts, initiators and stabilizers.

Furfuryl alcohol polymerizes (resinifies) in acidic media wherein the acid initiates and accelerates the polymerization reaction. Presence of strong acids is not desirable because this may lead to violent self-condensing polymerization of furfuryl alcohol which is difficult to control. It is therefore desirable to use weak acids in the polymerizable solution, e.g. organic acids, which do not separate from the furfuryl alcohol during impregnation and polymerization/curing. Choosing a weak acid that also has chemical affinity with the material to be impregnated, e.g. wood, is useful. A non-separating mixture with enhanced affinity for wood is known from WO 02/30638.

For some uses, it is desirable to impregnate porous materials like wood with a more dilute initiated furfuryl alcohol solutions, providing better control and economy than disclosed in WO 02/30638. It has been found that lower concentrations of furfuryl alcohol polymer (also named furan polymer or furan resin) in the wood still provide useful properties at lower cost and less change in appearance. Wood prepared according to WO 02/30638 is very dark colored. With lower concentrations of furfuryl alcohol, colors from light tan to dark brown are possible.

Control of the concentration of furan polymer in the final cured product can be obtained by using a liquid carrier for the furfuryl alcohol in the polymerizable solution. The carrier and furfuryl alcohol are applied into the product together before the polymerization process starts.

Several carriers are known from prior art, such as water or water and alcohol. Furfuryl alcohol is soluble in water, so water can be used as a carrier for diluted, uninitiated furfuryl alcohol. Water is an environmentally friendly, inexpensive substance and therefore often a preferred carrier.

As mentioned above, the polymerizable solution comprises an initiator for initiating the polymerization reaction. When an organic acid initiator is mixed with furfuryl alcohol and water (water being a carrier) the solution becomes very reactive which may cause the furfuryl alcohol to polymerize. Hence, a stabilizer is needed to provide a stable solution that is suitable for storing or at least impregnation prior to polymerizing, which is the basis of WO 02/060660.

The first useful chemical stabilizers discovered were borax and sodium salts of lignosulfonic acids. However, sodium salts of lignosulphonic acids show low solubility, are expensive, hard to work with and are thus less preferred stabilizers. Borax can be used to form a buffer and is also a biocide adding protection against biological degradation to the final furan polymer impregnated product. However, borax being a biocide, is undesirable for environmental reasons as borax is easily washed out from the final impregnated material and deposited in the environment.

Effort was made to make stable polymerizable solutions without the use of the stabilizers mentioned above. Such stabile polymerizable solutions should remain within a pH range during storage as a too acidic polymerizable solution will polymerize rapidly leading to phase separation and hence destroy the solution as such a reaction cannot be reversed. On the other hand, a too basic polymerizable solution would delay or hinder the polymerization reaction of the polymerizable solution during use, hence failing to provide a required reactivity and the targeted properties of the final impregnated product.

One of the methods providing such stable polymerizable solution include using stabilizing co-solvents as disclosed in WO 2004/011216. Such co-solvents can be methanol, ethanol, acetone or other volatile solvents. These co-solvents are both good solvents of furfuryl alcohol and good swelling agents for wood. The co-solvents dilute the acid concentration during storage and impregnation, thereby prolonging the storage life of the polymerizable solutions. When they are removed from the wood after impregnation thereof, i.e. before curing, the reactivity of the solution increases (pH is reduced) as the co-solvent is evaporated from the wood. An effective co-solvent removal step should be added to the treatment process. This removal step is preferably a vacuum drying process with a system for recovery of the co-solvent, so that the co-solvent can be re-used. By the use of such stabilizing co-solvents, no further stabilizers are needed, and the initiator : furfuryl alcohol ratio can be reduced. This favorably leads to lower amounts of leachable substances in the final impregnated wood product. Further, experiments show that stabilizing co-solvents maintained the pH in the polymerizable solution until after the wood was impregnated. Then the pH decreased (became more acidic) which facilitated curing.

However, the use of such co-solvents is more expensive and imposes more requirements on safety and process equipment than the use of water and is thus less favorable. These co-solvents are also considered to be volatile, challenging to recover and flammable. Use of such flammable co-solvent in closed off volumes. typical for process equipment, may lead to formation of explosive atmospheres if containing oxidizers as oxygen in air.

Polymerizable solutions for wood impregnation are also disclosed in WO2011/144608, WO 2004/011214, US2016/144531 and WO2020/053818.

A conventional polymerization process for obtaining an impregnated wood product is known from inter alia EP 2435223 A1, incorporated herein by reference. The process involves inter alia the use of an apparatus, i.e. a drying and curing chamber, for combined drying and curing. The process includes applying a polymerizable solution to the material to be impregnated, e.g. wood, before introducing the wood to the apparatus. The apparatus typically includes a drain port that permits so-called "bottom condensate", which is realized by compounds from the polymerizable solution and compounds from the wood, such as water, furfuryl alcohol, organic compounds, polymers and resins, to be drawn out of the apparatus during the heating phase and, to a lesser extent, the subsequent curing phase. Further, the principal mechanism for removal of water and other chemicals, so-called "top condensate", is via a condenser that taps into the drying and curing chamber towards its upper surface. Such top condensate is mainly realized by recondensing vaporized water, furfuryl alcohol and volatile organic compounds (VOCs) originating from the polymerizable solution and wood. The top condensate is then routed to a condensate tank for re-use. The bottom condensate is routed to a separator tank that separates the re-useable parts of the condensate from unusable, heavy density polymer. Thereafter, the re-useable parts are transferred to the condensate tank for re-use.

However, re-use of such condensate, i.e. the top condensate and the re-usable parts of the bottom condensate, as a carrier for providing a stable polymerizable solution suitable for obtaining a final impregnated wood product is challenging. This is partly due to resinified and oligomerized components in the condensate originating from the polymerizable solution becoming increasingly nonpolar with increasing degree of polymerization during curing. As such components are soluble in furfuryl alcohol, the presence of these components in the condensate when used as carrier will decrease the solubility of the organic furfuryl alcohol phase in water. This decreased solubility manifests as increased cloud point temperatures which is undesirable as the cloud point temperature of the initial polymerizable solution must be below the storage temperature of the solution to avoid phase separation. The condensate also has low pH due to acidic by-products formed during the polymerization reaction. The low pH accelerates the polymerization reaction hence shortening the storage life of the polymerizable solutions.

Further, the impregnation of wood, particularly with the presence of organic solvents in the condensate as carrier, can extract nonpolar components, such as terpenes (e.g. $\alpha$-pinene). Such nonpolar components also affect the water solubility thereby increasing the cloud point temperature with increasing concentration.

Hence, a first object of the present invention is to provide a polymerizable solution for impregnating materials such as wood which overcomes the disadvantages of prior art.

A second object of the present invention is to provide a polymerizable solution which is cheaper and more environmentally friendly than known solutions.

A third object of the present invention is to provide a polymerizable solution that is stable for at least 7 days, preferably at least 10 days, more preferably at least 14 days and even more preferably at least 21 days of storage in a closed container at ambient temperature normally being from 15 to 30 °C.

A fourth object of the present invention is to provide a furan polymer impregnated/chemically modified product, such as wood, having favorable or improved properties such as dimensional stability, mechanical strength, leaching-, decay- and weather resistance.

**Summary of the invention**

In a first aspect there is provided a polymerizable solution for impregnating wood, wherein the polymerizable solution comprises:

- furfuryl alcohol in the range from 25 to 75 weight% based on the total weight of the solution,
- carboxylic acid in the range from 0.01 to 0.15 mol/kg based on the total weight of the solution,
- maleic anhydride in the range from 0.25 to 4 weight% based on the total weight of the solution,
- water-soluble alkali salt in an amount such that the initial composition comprises a pH in the range from 3 to 5, and
- condensate from a previous curing process of wood in the range from 24 to 74 weight% based on the total weight of the solution, and
- an amount of water-soluble alkali salt to obtain a pH in the range from 3 to 5 at the time point when the solution is made.

In one embodiment according to the first aspect the water-soluble alkali salt is added to obtain a pH in the range from 3 to 4.5, more preferably from 3.5 to 4.

In one embodiment according to the first aspect the amount of furfuryl alcohol is in the range from 30 to 60 weight%, preferably from 35 to 60 weight%.

In one embodiment according to the first aspect the water-soluble alkali salt is chosen from at least one of a metal hydroxide salt, metal bicarbonate salt and metal carbonate salts.

In one embodiment according to the first aspect the carboxylic acid is selected from at least one of citric acid, fumaric acid, malic acid, malonic acid, oxalic acid, tartaric acid, 2-furoic acid, benzoic acid, levulinic acid and salicylic acid, preferably citric acid.

In one embodiment according to the first aspect the total amount of carboxylic acid and maleic anhydride is equal to or less than 4.5 weight%.

In a second aspect there is provided impregnated wood impregnated with the polymerizable solution according to the first aspects and any embodiments thereof.

In a third aspect there is provided a method for preparing a polymerizable solution wherein the method comprises the subsequent steps of:

- providing a condensate from a curing process in a container,
- adding furfuryl alcohol into the container,
- adding carboxylic acid, maleic anhydride and water-soluble alkali salt into the container.

In one embodiment according to the third aspect the amount of water-soluble alkali salt is added to obtain a pH in the range from 3 to 5 at the time point when the solution is made.

In a fourth aspect there is provided a polymerizable solution for impregnating wood comprising

- furfuryl alcohol in the range from 25 to 75 weight% based on the total weight of the solution,
- carboxylic acid in the range from 0.01 to 0.15 mol/kg based on the total weight of the solution,
- maleic anhydride in the range from 0.25 to 4 weight% based on the total weight of the solution,
- condensate from a previous curing process of wood in the range from 24 to 74 weight% based on the total weight of the solution, and
- an amount of water-soluble alkali salt to obtain a pH in the range from 3 to 5 at the time point when the solution is made and
- wherein the polymerizable solution is obtained by the method according to third aspect.

In a fifth aspect there is provided use of the polymerizable solution according to the first aspect and any embodiments thereof for impregnating wood.

**Detailed description**

In the following the invention will be described in more detail with reference to the provided examples. However, the invention is not limited to these examples.

Unless specifically defined herein, all technical and scientific terms used have the same meaning as commonly understood by a skilled artisan in the fields of polymer engineering and wood impregnation.

To mitigate inter alia the environmental challenges regarding the disposal of condensate produced in a curing/polymerization process, the present invention provides a polymerizable solution for impregnating a material, such as wood, which re-uses such condensate as a carrier in the polymerizable solution.

Hence, the present invention provides for an optimized furan polymerizable solution which is suitable for storage, cheap and environmentally friendly, and which further provides for a furan polymer impregnated wood having favorable or improved properties such as dimensional stability, mechanical strength, leaching-, decay- and weather resistance and which is uniform in color and density and which can utilize condensate as a carrier in the solution.

Thus in a first aspect there is provided a polymerizable solution for impregnating wood, wherein the polymerizable solution comprises:

- furfuryl alcohol in the range from 25 to 75 weight% based on the total weight of the solution,
- carboxylic acid in the range from 0.01 to 0.15 mol/kg based on the total weight of the solution,
- maleic anhydride in the range from 0.25 to 4 weight% based on the total weight of the solution,
- water-soluble alkali salt in an amount such that the initial composition comprises a pH in the range from 3 to 5, and
- condensate from a previous curing process of wood in the range from 24 to 74 weight% based on the total weight of the solution, and

- an amount of water-soluble alkali salt to obtain a pH in the range from 3 to 5 at the time point when the solution is made.

There is also described herein a polymerizable solution for impregnating materials such as wood having a composition which comprises:

- furfuryl alcohol in the range from 25 to 75 weight% based on the weight of the total composition of the polymerizable solution,
- carboxylic acid in the range from 0.01 to 0.15 mol/kg based on the weight of the total composition of the polymerizable solution,
- maleic anhydride in the range from 0.25 to 4 weight% based on the weight of the total composition of the polymerizable solution,
- water-soluble alkali salt in an amount such that the initial composition comprises a pH in the range from 3 to 5, and
- water and/or condensate in the range from 24 to 74 weight% based on the weight of the total composition of the polymerizable solution.

The water-soluble alkali salt is always present in the polymerizable solution as the initial composition without the water-soluble alkali salt always has a pH of less than 3.

The polymerizable solution of the above composition is suitable for storage, meaning that the solution can be stored in a closed container for at least 7 days, preferably at least 10 days, more preferably at least 14 days or even more preferably for at least 21 days without separating under ambient conditions.

As the condensate used as a carrier in the polymerizable solution is acidic and may have a pH of less than 3, it will, when added as an alternative carrier to water in a conventional furan polymerizable solution, accelerate the polymerization of the solution, hence providing a solution that separates fast. A solution that separates fast, such as for example within 48 hours, is undesirable since the application/impregnation of the material must take place before any such separation occurs. The composition of the inventive polymerizable solution mitigates this problem in that the polymerizable solution comprises an organic buffer provided by the presence of a carboxylic acid as buffer agent and a controlled amount of a water-soluble alkali salt for adjusting the pH of the initial polymerizable solution to be within the target pH range from 3 to 5, or more preferably within the pH range from 3 to 4.5, or even more preferably within the pH range from 3.5 to 4 as this range has proven to provide the most stable polymerizable solutions and further retaining good reactivity when heated in the polymerization process.

The carboxylic acid added to the polymerizable solution of the present invention does not serve as an initiator, but as a buffering agent for keeping the pH as steady as possible during storage such that the acidity of the condensate does not influence the pH stability of the solution providing for a less sensitive and more stable polymerizable solution. Experiments have shown that the amount of carboxylic acid in the polymerizable solution must be in the range from 0.01 to 0.15 mol/kg based on weight of the total composition of the polymerizable solution.

A too acidic polymerizable solution, such as a solution having a pH of less than 3, will polymerize rapidly leading to phase separation and hence destroy the solution as such a reaction cannot be reversed. On the other hand, a too basic polymerizable solution, such as a solution having a pH above 5, would delay or hinder the polymerization reaction of the polymerizable solution during use, hence failing to provide a required reactivity and the targeted properties of the final impregnated product. It is therefore important to provide a polymerizable solution wherein the pH of the initial solution can be controlled to a pH-value within the range from 3 to 5 which is not considered as too acidic or too basic. Due to the acidic properties of the condensate in the polymerizable solution the amount of added water-soluble alkali salt will depend on the acidity thereof and of the buffer range and buffer capacity of added acids.

The water-soluble alkali salt may advantageously be chosen from at least one of a metal hydroxide salt, metal bicarbonate salt and metal carbonate salt as for all practical purposes these only add cations and $OH^-$ to the polymerizable solution thereby primarily affecting the pH of the polymerizable solution. Preferably the water-soluble alkali salt is sodium carbonate ($Na_2CO_3$) being environmentally friendly, highly available and cheap.

It is commonly known that a buffer solution has the ability to resist changes in pH with changes in concentration of acid or alkali. The buffer capacity ($\beta$) is a quantitative measure of this and for a solution of a simple carboxylic acid can be expressed as

$$\beta = 2.303 \left( [H^+] + \frac{C_{CA} K_a [H^+]}{\{K_a + [H^+]\}^2} + \frac{K_w}{[H^+]} \right)$$

where

$[H^+]$ is the equilibrium concentration of $H^+$-ions,

$C_{CA}$ is the total concentration of carboxylic acid in the solution,
$K_a$ is the acid dissociation constant of the carboxylic acid, and
$K_w$ is the dissociation constant of water.

The above equation shows that the buffer capacity of such a solution primarily is dependent on the carboxylic acid concentration. For monocarboxylic acids, the buffer capacity is at maximum when pH = p$K_a$. It falls to 33 % of the maximum value at pH = p$K_a$ ± 1, falls to 12 % of the maximum value at pH = p$K_a$ ± 1.5 and falls to 4 % of the maximum value at pH = p$K_a$ ± 2. For dicarboxylic acids p$K_a$-values separated by 2 would thus lead to a summed 66 % buffer capacity at p$K_{a1}$ + 1 = pH = p$K_{a2}$ - 1, while p$K_a$-values separated by 3 would give a buffer capacity of 24 % at the mid-point.

Hence, the p$K_a$-value, or at least one p$K_a$-value if more than one, of the carboxylic acid of the polymerizable solution may preferably be within ±1.5 of the target pH or within ±1.5 of one of the endpoints of the target pH range (the buffer region). Preferably the p$K_a$-value, or at least one p$K_a$-value if more than one, of the carboxylic acid of the polymerizable solution may preferably be within ±1 of the target pH or within ±1 of one of the endpoints of the target pH range.

Further, poly-carboxylic acids with several p$K_a$-values separated by ≤3, i.e. $\Delta \leq 3$, have increased buffer capacity which is beneficial and hence preferred.

Carboxylic acids suitable as buffering agents may include, but are not limited to at least one of the following: monocarboxylic acids, such as acetic acid, propionic acid and butyric acid; unsaturated carboxylic acids, such as crotonic acid and sorbic acid; hydroxy carboxylic acids, such as glycolic acid and lactic acid; keto carboxylic acids, such as pyruvic acid and levulinic acid; heteroaromatic carboxylic acids, such as 2-furoic acid; phenylic carboxylic acids, such as benzoic acid, salicylic acid and gallic acid; dicarboxylic acids, such as oxalic acid, malonic acid and succinic acid; unsaturated dicarboxylic acids, such as fumaric acid; hydroxy dicarboxylic acids, such as malic acid and tartaric acid; and tricarboxylic acids, such as propane-1,2,3-tricarboxylic acid, aconitic acid and citric acid.

The carboxylic acid of the polymerizable solution of the invention may preferably be selected from at least one of citric acid, fumaric acid, malic acid, malonic acid, oxalic acid, tartaric acid, 2-furoic acid, levulinic acid, benzoic acid and salicylic acid.

The total amount of carboxylic acid added to the total composition is as stated above within the range from 0.01 to 0.15 mol/kg based on the total composition of the polymerizable solution. This amount will, as known to the person skilled in the art, correspond to about 0.25 to 3 weight% of citric acid, about 0.15 to 1.8 weight% of fumaric acid, about 0.17 to 2.1 weight% of malic acid, about 0.14 to 1.6 weight% of malonic acid, about 0.12 to 1.4 weight% of oxalic acid, about 0.20 to 2.3 weight% of tartaric acid, about 0.15 to 1.8 weight% of 2-furoic, about 0.15 to 1.8 weight% of levulinic acid, about 0.18 to 2.2 weight% of salicylic acid and about 0.16 to 1.9 weight% of benzoic acid, all based weight of the total composition of the polymerizable solution.

Non-carboxylic acids, such as for example phosphoric acid and sulfuric acid are not suitable buffer agents as such solutions separate quickly. Phosphoric acid has p$K_a$-values of 2.1, 7.2 and 12.4 and hence having a $\Delta$ > 3 making it a much less suitable than for example citric acid satisfying this criterion. Sulfuric acid is not a weak acid and will hence accelerate the polymerization process and is thus not suitable.

Other advantageous properties of the carboxylic acids in view of non-carboxylic acids which may also affect the polymerizable solution are properties such as the partition coefficient (log $P$), dipole moment ($Ð$), proticity and hydrogen bonding which may be properties that indicate compound polarity and intermolecular forces, subsequently determining solubility properties and solvation.

Citric acid is considered as preferably suitable as it is highly soluble in both water and furfuryl alcohol and further has p$K_a$-values which allow the pH of the polymerizable solution to be stable within the mentioned range and hence allowing for a bigger buffer capacity. Further, citric acid is cheap and considered environmentally friendly when released into nature.

Experiments have shown that the amount of carboxylic acid should be limited, i.e. should not exceed 0.15 mol/kg of the total composition, as too high amounts will reduce the storage time of the polymerizable solution, i.e. the time to phase separation, hence allowing the carboxylic acid to serve more as an initiator rather than a buffering agent, and hence providing a less stable polymerizable solution being less suitable for storage.

Hence, maleic anhydride is added to the solution for serving as an initiator in the polymerizable solution. Maleic anhydride is a well-known initiator having great initiating properties and wood affinity and is additionally more environmentally friendly than other initiators known from prior art such as phthalic anhydride.

Advantageously, to limit the acceleration of polymerization of the polymerizable solution, the total amount of carboxylic acid and maleic anhydride in the polymerizable solution may be equal to or less than 4.5 weight%, even more preferably less than 4.

Another problem related to the re-use of condensate in conventional furan polymerizable solution concerns the oligomers and possibly other compounds in the condensate which are insoluble in water. Such compounds must be dissolved in the polymerizable solution prior to storage and impregnation to ensure a uniform density and an even surface structure of the final impregnated product providing better weather resistant properties, mechanical strength properties etc.

The polymerizable solution of the present invention dissolves such compounds by having a sufficient amount of furfuryl alcohol in the polymerizable solution.

Generally, for all polymerizable solutions to be suitable for storage it is also important that the cloud point temperature (Cp) of the initial polymerizable solution is below the storage temperature of the solution. The cloud point temperature is defined as the temperature at which the onset of phase separation could be visually observed as a clouding of the solution. The presence of oligomers in the solution contribute to raise the cloud point temperature of the polymerizable solution, whilst the increased presence of furfuryl alcohol lowers the cloud point temperature.

So, in addition to being the essential ingredient for the polymerization of the polymerizable solution, the amount of furfuryl alcohol is important for providing a stable polymerizable solution suitable for storage.

The amount of furfuryl alcohol should be at least 25 weight% of the total composition of the polymerizable solution to provide such properties.

The most stable polymerizable solutions for storage have an amount of furfuryl alcohol from 25 to 75 weight% of the total composition of the polymerizable solution, preferably in the range from 30 to 60 weight%, and even more preferably in the range from 35 to 60 weight%.

Wood and wood materials are the principal products which are impregnated and polymerized by the polymerizable solution of this invention, but other porous materials like brick, Portland cement, concrete and stone could be similarly impregnated.

In a third aspect there is provided impregnated wood impregnated with the polymerizable solution according to the first aspect and embodiments thereof.

A fourth aspect of the present invention provides a method for preparing the polymerizable solution according to the first aspect.

The method comprises the subsequent steps of:

- providing condensate from a curing process into a container,
- adding furfuryl alcohol into the container comprising the condensate,
- adding carboxylic acid, maleic anhydride and water-soluble alkali salt into the container comprising furfuryl alcohol and condensate.

In other words, the method may involve adding the carrier in the form of condensate into a container. Thereafter furfuryl alcohol may be added to the same container, preferably during stirring. Carboxylic acid, maleic anhydride and water-soluble alkali salt may then be added simultaneously or nearly simultaneously while measuring the pH of the initial polymerizable solution.

In one embodiment the amount of water-soluble alkali salt is added to obtain a pH in the range from 3 to 5 at the time point when the solution is made.

The pH of the initial polymerizable solution may be measured by any conventional method known in the art.

The method may further include stirring or mixing during and/or between each step.

Depending on the process equipment the whole process may take from about 5 min to several hours.

If the container is to be stored under non-ambient temperatures, the container is preferably made of a material that allows the content therein not to be affected by the surroundings.

In a fourth aspect there is provided a polymerizable solution for impregnating wood comprising

- furfuryl alcohol in the range from 25 to 75 weight% based on the total weight of the solution,
- carboxylic acid in the range from 0.01 to 0.15 mol/kg based on the total weight of the solution,
- maleic anhydride in the range from 0.25 to 4 weight% based on the total weight of the solution,
- condensate from a previous curing process of wood in the range from 24 to 74 weight% based on the total weight of the solution, and
- an amount of water-soluble alkali salt to obtain a pH in the range from 3 to 5 at the time point when the solution is made and
- wherein the polymerizable solution is obtained by the method according to third aspect.

There is also provided a polymerizable solution for impregnating a material such as wood, wherein the solution comprises

- furfuryl alcohol in the range from 25 to 75 weight% based on the weight of the total composition of the polymerizable solution,
- carboxylic acid in the range from 0.01 to 0.15 mol/kg based on the weight of the total composition of the polymerizable solution,

- maleic anhydride in the range from 0.25 to 4 weight% based on the weight of the total composition of the polymerizable solution,
- water-soluble alkali salt in an amount such that the initial composition comprises a pH in the range from 3 to 5, and
- condensate in the range from 24 to 74 weight% based on the weight of the total composition of the polymerizable solution, and
- wherein the polymerizable solution is obtained by the above-mentioned method.

In a fifth aspect the present invention discloses the use of the polymerizable solution of the first aspect and embodiments thereof for impregnating wood to obtain a final impregnated wood product.

The term "initial composition/initial polymerizable solution" should be interpreted as the starting composition of the polymerizable solution before storing. Hence, being the composition of the polymerizable solution just after all the ingredients have been added and mixed.

The term "impregnation/impregnating" should be interpreted as the action of applying the polymerizable solution to the material (e.g. wood) in the process of obtaining an impregnated product (e.g. impregnated wood).

The term "final furan polymer impregnated product/impregnated product" should be interpreted as the product/material obtained after the material has been subjected to impregnation and curing/polymerization. Hence the material comprising the furan polymer, such as furan polymer impregnated wood.

The term "condensate" should be interpreted as a liquid solution comprising the so-called "top condensate" and the re-useable part of the so-called "bottom condensate" obtained during the process of drying and curing impregnated wood with the inventive polymerizable solution. Hence the condensate mainly comprises water, furfuryl alcohol, residues of organic compounds and acids obtained from a previous curing process of wood with a polymerizable solution according to the invention.

The term "stable solution" should be interpreted as a polymerizable solution where no phase separation has occurred. Hence, a stable solution can be stored for at least 7 days at ambient temperature and pressure without the occurrence of phase separation, preferably 10 days, more preferably 14 days and even more preferably 21 days.

Ranges mentioned herein should be interpreted to include the endpoints.

Ambient temperature should be interpreted as a temperature from 15 to 30 °C. Ambient pressure should be interpreted as atmospheric pressure. The term "ambient conditions" should be interpreted as conditions wherein the temperature is from 15 to 30 °C and the pressure is atmospheric.

In the first experiments below polymerizable solutions were made with water as a carrier for comparison reasons of the variating amounts of ingredients in the polymerizable solution. As already mentioned, the composition of condensate is varying as every polymerization process produces condensates of different compositions.

Experiments were hence conducted with the different compositions of polymerizable solutions as shown in Table 1.

Table 1:

| No. | FA wt % | MA wt % | CA wt % | SC wt % | Initial pH | pH at $d_1$ | pH at $d_{14}$ | $\Delta$pH ($d_0$-$d_{14}$) | Cp at $d_1$ (°C) | Cp at $d_{14}$ (°C) | Phase separation | | | |
|---|---|---|---|---|---|---|---|---|---|---|---|---|---|---|
| | | | | | | | | | | | $d_1$ | $d_7$ | $d_{14}$ | $d_{21}$ |
| 1 | 35 | 0.25 | 0.25 | 0.18 | 3.82 | 3.88 | 4.04 | 0.16 | 1 | 16 | N | N | N | Y |
| 2 | 35 | 0.25 | 0.5 | 0.24 | 3.87 | 3.86 | 3.96 | 0.10 | 4 | 19 | N | N | N | N |
| 3 | 35 | 0.5 | 0.25 | 0.31 | 3.88 | 3.85 | 4.12 | 0.27 | -2 | 10 | N | N | N | N |
| 4 | 35 | 1 | 1 | 0.65 | 3.78 | 3.86 | 4.10 | 0.24 | -5 | 10 | N | N | N | N |
| 5 | 35 | 2 | 1 | 1.3 | 3.83 | 3.88 | 4.05 | 0.17 | -10 | 10 | N | N | N | N |
| 6 | 35 | 2 | 2 | 1.49 | 3.80 | 3.88 | 3.99 | 0.11 | -10 | 19 | N | N | N | Y |
| 7 | 35 | 1 | 4 | 1.49 | 3.86 | 3.82 | 3.95 | 0.13 | 7 | 34 | N | N | Y | Y |
| 8 | 12 | 1 | 1 | 0.8 | 3.81 | 3.86 | 3.98 | 0.12 | -10 | 22 | N | Y | Y | Y |
| 9 | 20 | 1 | 1 | 0.78 | 3.84 | 3.9 | 4.02 | 0.12 | -10 | 37 | N | Y | Y | Y |
| 10 | 50 | 1 | 1 | 0.75 | 3.89 | 3.88 | 4.07 | 0.19 | -2 | 4 | N | N | N | N |
| 11 | 60 | 1 | 1 | 0.74 | 3.88 | 3.87 | 4.09 | 0.22 | -5 | 4 | N | N | N | N |
| 12 | 50 | 1 | 4 | 1.41 | 3.8 | 3.85 | 4.00 | 0.15 | 13 | 34 | N | N | Y | Y |

(continued)

| No. | FA wt % | MA wt % | CA wt % | SC wt % | Initial pH | pH at d$_1$ | pH at d$_{14}$ | ΔpH (d$_0$-d$_{14}$) | Cp at d$_1$ (°C) | Cp at d$_{14}$ (°C) | Phase separation | | | |
|-----|---------|---------|---------|---------|------------|-------------|----------------|----------------------|------------------|---------------------|------------------|------|----------|------|
| | | | | | | | | | | | d$_1$ | d$_7$ | d$_{14}$ | d$_{21}$ |
| 13 | 60 | 1 | 4 | 1.32 | 3.8 | 3.88 | 3.96 | 0.08 | 19 | 37 | Y | Y | Y | Y |

In the experiments furfuryl alcohol (FA), maleic anhydride (MA), carboxylic acid buffer agent (represented by citric acid (CA)), water-soluble alkali salt (represented by anhydrous sodium carbonate (SC)) and water were mixed together and stored for up to 21 days at 27°C and ambient pressure. The amounts of FA, MA, CA and SC in the solution are shown in weight % (wt%), and the remaining ingredient is the water such that the amount of all the ingredients adds up to 100 weight% being the total composition of the polymerizable solution.

Table 1 indicates that the initial pH of the polymerizable solution is being about 3.8 to 3.9. This is the pH of the solution after all the components have been added together and stirred until a homogenous solution is obtained, hence being the pH of the solution at the time it is initially placed for storage.

Table 1 further indicates the pH after storage for 1 day (d$_1$) and after storage for 14 days (d$_{14}$), and the difference in pH, ΔpH(d$_0$-d$_{14}$), from the day put to storage (d$_0$) and after 14 days of storage (d$_{14}$).

The cloud point temperature (Cp) was also measured after storing the solution for 1 day (d$_1$) and for 14 days (d$_{14}$).

The last columns of the table indicate if any phase separation occurred after storing the solution for 1 day (d$_1$), 7 days (d$_7$), 14 days (d$_{14}$) and 21 days (d$_{21}$), wherein "N" indicates that no phase separation had occurred and "Y" indicates that a phase separation had occurred.

Experiments No. 1-6, 10 and 11 show that no phase separation occurred within the first 14 days (d$_{14}$) of storage at 27°C. Hence, these solutions are considered to be stable.

Further, from the table it is shown that too much carboxylic acid initiator such as equal to or above 4 wt% added to the composition, provides a less stable solution causing phase separation within 14 days of storage as shown in Experiments No. 7, 12 and 13. Hence, it is important that the total amount of added acid is controlled to avoid too early initiation of the polymerization process.

Further, the experiments show that less than 20 weight% furfuryl alcohol in the solution (Experiments No. 8 and 9) also caused phase separation within 14 days of storage. This is caused by the low amount of furfuryl alcohol giving a low tolerance to the presence of oligomers and polymers building up over time before phase separation occurs, hence causing a swifter rise in cloud point (Cp) than for similar solutions having more FA. Hence, the polymerizable solution should comprise a least 25 wt% furfuryl alcohol for providing a stable polymerizable solution.

Further, experiments were done comparing the initial cloud point temperature of polymerizable solutions using water or condensate as carrier without a carboxylic acid as buffering agent added thereto. The polymerizable solutions of the experiments comprise 35 wt% furfuryl alcohol, 1 wt% maleic anhydride (MA) and water-soluble alkali salt (represented by anhydrous sodium carbonate (SC)) for adjusting the initial pH for comparison reasons, see Table 2 below.

Table 2:

| Carrier | MA wt% | Carboxylic acid | Acid mmol | Acid wt% | SC wt% | Initital pH | Initial Cp |
|---------|--------|-----------------|-----------|----------|--------|-------------|------------|
| Water | 1,0 | - | - | - | 0,42 | 3,75 | -1,25 |
| Condensate | 1,0 | - | - | - | 0,43 | 3,78 | 6,1 |

As indicated in Table 2, the initial cloud point when using water as a carrier is substantially lower than for condensate. Hence using water as a carrier will provide for a more stable polymerizable solution than the use of condensate under the same conditions. Hence Table 2 illustrates the challenge associated with providing a stable polymerizable solution when using condensate as a carrier.

Table 3 below is listing examples of preferred carboxylic acids having a pK$_a$-value, or at least one pK$_a$-value if more than one, within the range of ±1 of the target pH or within the range of ±1 of one of the endpoints of the target pH range (the buffer region).

Further, the preferred poly-carboxylic acids have pK$_a$-values separated by ≤ 3, i.e. Δ ≤ 3.

Table 3:

| Acid | pK$_{a1}$ | pK$_{a2}$ | pK$_{a3}$ | Δ |
|------|-----------|-----------|-----------|---|
| Citric acid (C$_6$H$_8$O$_7$) | 3.1 | 4.8 | 6.4 | 1.7, 1.6 |

(continued)

| Acid | $pK_{a1}$ | $pK_{a2}$ | $pK_{a3}$ | Δ |
|---|---|---|---|---|
| Fumaric acid ($C_4H_4O_4$) | 3.0 | 4.5 | | 1.5 |
| Malic acid ($C_4H_6O_5$) | 3.4 | 5.2 | | 1.8 |
| Malonic acid ($C_3H_4O_4$) | 2.8 | 5.7 | | 2.9 |
| Oxalic acid ($H_2C_2O_4$) | 1.3 | 4.3 | | 3.0 |
| Tartaric acid ($C_4H_6O_6$) | 2.9 | 4.4 | | 1.5 |
| 2-Furoic acid ($C_5H_4O_3$) | 3.1 | | | - |
| Levulinic acid ($C_5H_8O_3$) | 4.6 | | | - |
| Salicylic acid ($C_7H_6O_3$) | 3.0 | | | - |
| Benzoic acid ($C_7H_6O_2$) | 4.2 | | | - |

**Claims**

1. A polymerizable solution for impregnating wood, **characterized in that** the solution comprises:

    - furfuryl alcohol in the range from 25 to 75 weight% based on the total weight of the solution,
    - carboxylic acid in the range from 0.01 to 0.15 mol/kg based on the total weight of the solution,
    - maleic anhydride in the range from 0.25 to 4 weight% based on the total weight of the solution,
    - water-soluble alkali salt in an amount such that the initial composition comprises a pH in the range from 3 to 5, and
    - condensate from a previous curing process of wood in the range from 24 to 74 weight% based on the total weight of the solution, and
    - an amount of water-soluble alkali salt to obtain a pH in the range from 3 to 5 at the time point when the solution is made.

2. The polymerizable solution according to claim 1, wherein the water-soluble alkali salt is added to obtain a pH in the range from 3 to 4.5, more preferably from 3.5 to 4.

3. The polymerizable solution according to any one of the preceding claims, wherein the amount of furfuryl alcohol is in the range from 30 to 60 weight%, preferably from 35 to 60 weight%.

4. The polymerizable solution according to any one of the preceding claims, wherein the water-soluble alkali salt is chosen from at least one of a metal hydroxide salt, metal bicarbonate salt and metal carbonate salts.

5. The polymerizable solution according to any one of the preceding claims, wherein the carboxylic acid is selected from at least one of citric acid, fumaric acid, malic acid, malonic acid, oxalic acid, tartaric acid, 2-furoic acid, benzoic acid, levulinic acid and salicylic acid, preferably citric acid.

6. The polymerizable solution according to any one of the preceding claims, wherein the total amount of carboxylic acid and maleic anhydride is equal to or less than 4.5 weight%.

7. Impregnated wood impregnated with the polymerizable solution according any one of the claims 1 to 6.

8. A method for preparing a polymerizable solution according to any one of claims 1-6, wherein the method comprises the subsequent steps of:

    - providing a condensate from a curing process in a container,
    - adding furfuryl alcohol into the container,
    - adding carboxylic acid, maleic anhydride and water-soluble alkali salt into the container.

9. A polymerizable solution for impregnating wood comprising

- furfuryl alcohol in the range from 25 to 75 weight% based on the total weight of the solution,
- carboxylic acid in the range from 0.01 to 0.15 mol/kg based on the total weight of the solution,
- maleic anhydride in the range from 0.25 to 4 weight% based on the total weight of the solution,
- condensate from a previous curing process of wood in the range from 24 to 74 weight% based on the total weight of the solution,
- an amount of water-soluble alkali salt to obtain a pH in the range from 3 to 5 at the time point when the solution is made and
- wherein the polymerizable solution is obtained by the method according to claim 8.

10. Use of the polymerizable solution according to any one of claims 1 to 6 for impregnating wood.


**Patentansprüche**

1. Polymerisierbare Lösung zum Imprägnieren von Holz, **dadurch gekennzeichnet, dass** die Lösung umfasst:

   - Furfurylalkohol im Bereich von 25 bis 75 Gew.-%, bezogen auf das Gesamtgewicht der Lösung,
   - Carbonsäure im Bereich von 0,01 bis 0,15 mol/kg, bezogen auf das Gesamtgewicht der Lösung,
   - Maleinsäureanhydrid im Bereich von 0,25 bis 4 Gew.-%, bezogen auf das Gesamtgewicht der Lösung,
   - wasserlösliches Alkalisalz in einer derartigen Menge, dass die anfängliche Zusammensetzung einen pH-Wert im Bereich von 3 bis 5 umfasst, und
   - Kondensat von einem vorherigen Härtungsvorgang von Holz im Bereich von 24 bis 74 Gew.-%, bezogen auf das Gesamtgewicht der Lösung, und
   - eine Menge von wasserlöslichem Alkalisalz, um einen pH-Wert im Bereich von 3 bis 5 zu dem Zeitpunkt zu erhalten, zu dem die Lösung hergestellt wird.

2. Polymerisierbare Lösung nach Anspruch 1, wobei das wasserlösliche Alkalisalz zugegeben wird, um einen pH-Wert im Bereich von 3 bis 4,5, mehr bevorzugt von 3,5 bis 4 zu erhalten.

3. Polymerisierbare Lösung nach einem der vorhergehenden Ansprüche, wobei die Menge von Furfurylalkohol im Bereich von 30 bis 60 Gew.-%, vorzugsweise von 35 bis 60 Gew.-% liegt.

4. Polymerisierbare Lösung nach einem der vorhergehenden Ansprüche, wobei das wasserlösliche Alkalisalz aus mindestens einem von einem Metallhydroxidsalz, Metallbicarbonatsalz und Metallcarbonatsalzen ausgewählt ist.

5. Polymerisierbare Lösung nach einem der vorhergehenden Ansprüche, wobei die Carbonsäure aus mindestens einer von Citronensäure, Fumarsäure, Äpfelsäure, Malonsäure, Oxalsäure, Weinsäure, 2-Furoesäure, Benzoesäure, Lävulinsäure und Salicylsäure ausgewählt ist, vorzugsweise Citronensäure ist.

6. Polymerisierbare Lösung nach einem der vorhergehenden Ansprüche, wobei die Gesamtmenge von Carbonsäure und Maleinsäureanhydrid gleich oder kleiner als 4,5 Gew.-% ist.

7. Imprägniertes Holz, das mit der polymerisierbaren Lösung nach einem der Ansprüche 1 bis 6 imprägniert ist.

8. Verfahren zur Herstellung einer polymerisierbaren Lösung nach einem der Ansprüche 1-6, wobei das Verfahren die aufeinanderfolgenden Schritte umfasst:

   - Bereitstellen eines Kondensats von einem Härtungsvorgang in einem Behälter,
   - Zugeben von Furfurylalkohol in den Behälter,
   - Zugeben von Carbonsäure, Maleinsäureanhydrid und wasserlöslichem Alkalisalz in den Behälter.

9. Polymerisierbare Lösung zum Imprägnieren von Holz, umfassend

   - Furfurylalkohol im Bereich von 25 bis 75 Gew.-%, bezogen auf das Gesamtgewicht der Lösung,
   - Carbonsäure im Bereich von 0,01 bis 0,15 mol/kg, bezogen auf das Gesamtgewicht der Lösung,
   - Maleinsäureanhydrid im Bereich von 0,25 bis 4 Gew.-%, bezogen auf das Gesamtgewicht der Lösung,
   - Kondensat von einem vorherigen Härtungsvorgang von Holz im Bereich von 24 bis 74 Gew.-%, bezogen auf das Gesamtgewicht der Lösung,

- eine Menge von wasserlöslichem Alkalisalz, um einen pH-Wert im Bereich von 3 bis 5 zu dem Zeitpunkt zu erhalten, zu dem die Lösung hergestellt wird, und
- wobei die polymerisierbare Lösung durch das Verfahren nach Anspruch 8 erhalten wird.

**10.** Verwendung der polymerisierbaren Lösung nach einem der Ansprüche 1 bis 6 zum Imprägnieren von Holz.

**Revendications**

**1.** Solution polymérisable pour imprégner du bois, **caractérisée en ce que** la solution comprend :

- de l'alcool furfurylique dans la plage de 25 à 75 % en poids par rapport au poids total de la solution,
- de l'acide carboxylique dans la plage de 0,01 à 0,15 mol/kg par rapport au poids total de la solution,
- de l'anhydride maléique dans la plage de 0,25 à 4 % en poids par rapport au poids total de la solution,
- un sel alcalin soluble dans l'eau en une quantité telle que la composition initiale présente un pH dans la plage de 3 à 5, et
- un condensat provenant d'un processus de durcissement antérieur de bois dans la plage de 24 à 74 % en poids par rapport au poids total de la solution, et
- une quantité de sel alcalin soluble dans l'eau pour obtenir un pH dans la plage de 3 à 5 au moment de la préparation de la solution.

**2.** Solution polymérisable selon la revendication 1, où le sel alcalin soluble dans l'eau est ajouté pour obtenir un pH dans la plage de 3 à 4,5, plus préférablement de 3,5 à 4.

**3.** Solution polymérisable selon l'une quelconque des revendications précédentes, où la quantité d'alcool furfurylique est dans la plage de 30 à 60 % en poids, préférablement de 35 à 60 % en poids.

**4.** Solution polymérisable selon l'une quelconque des revendications précédentes, où le sel alcalin soluble dans l'eau est choisi parmi au moins un parmi un sel d'hydroxyde métallique, un sel de bicarbonate métallique et des sels de carbonate métallique.

**5.** Solution polymérisable selon l'une quelconque des revendications précédentes, où l'acide carboxylique est choisi parmi au moins un parmi l'acide citrique, l'acide fumarique, l'acide malique, l'acide malonique, l'acide oxalique, l'acide tartrique, l'acide 2-furoïque, l'acide benzoïque, l'acide lévulinique et l'acide salicylique, préférablement l'acide citrique.

**6.** Solution polymérisable selon l'une quelconque des revendications précédentes, où la quantité totale d'acide carboxylique et d'anhydride maléique est égale ou inférieure à 4,5 % en poids.

**7.** Bois imprégné avec la solution polymérisable selon l'une quelconque des revendications 1 à 6.

**8.** Procédé de préparation d'une solution polymérisable selon l'une quelconque des revendications 1 à 6, où le procédé comprend les étapes suivantes :

- la fourniture d'un condensat provenant d'un processus de durcissement dans un récipient,
- l'ajout d'alcool furfurylique dans le récipient,
- l'ajout d'acide carboxylique, d'anhydride maléique et de sel alcalin soluble dans l'eau dans le récipient.

**9.** Solution polymérisable pour imprégner du bois, comprenant

- de l'alcool furfurylique dans la plage de 25 à 75 % en poids par rapport au poids total de la solution,
- de l'acide carboxylique dans la plage de 0,01 à 0,15 mol/kg par rapport au poids total de la solution,
- de l'anhydride maléique dans la plage de 0,25 à 4 % en poids par rapport au poids total de la solution,
- un condensat provenant d'un processus de durcissement antérieur de bois dans la plage de 24 à 74 % en poids par rapport au poids total de la solution,
- une quantité de sel alcalin soluble dans l'eau pour obtenir un pH dans la plage de 3 à 5 au moment de la préparation de la solution et
- où la solution polymérisable est obtenue par le procédé selon la revendication 8.

**10.** Utilisation de la solution polymérisable selon l'une quelconque des revendications 1 à 6 pour imprégner du bois.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0230638 A
- WO 02060660 A
- WO 2004011216 A
- WO 2011144608 A
- WO 2004011214 A
- US 2016144531 A
- WO 2020053818 A
- EP 2435223 A1